# EUROPEAN PATENT APPLICATION

(11) **EP 3 937 154 A1**
(43) Date of publication of application: **12.01.2022**
(21) Application number: 21184464.2
(22) Date of filing: 08.07.2021
(51) Int. Cl.: G09B 7/00, G06F 16/9032

(54) **METHOD FOR VIDEO INTERACTION AND ELECTRONIC DEVICE**

(30) Priority: 08.07.2020 CN 202010651484
(71) Applicant: Beijing Dajia Internet Information Technology Co., Ltd., Beijing 100085 (CN)
(72) Inventor: DI, Yifeng, 100085, Beijing (CN)
(74) Representative: Yang, Shu

(57) **Abstract**

Disclosed are a method for video interaction and an electronic device, whichbelong to the field of internet technologies. The method includes: displaying (210) an information input interface in response to an information input instruction from a first user account for a target video in a playing state; acquiring (220), via the information input interface, target information input by the first user account, and generating corresponding interaction information based on the target information and a target video frame picture corresponding to the target information; and sending (230) the interaction information to a second user account.

## Description

### CROSS-REFERENCE TO RELATED APPLICATION

This application is based on and claims priority to Chinese Patent Application No. 202010651484.1, filed on July 8, 2020, the disclosure of which is herein incorporated by reference in its entirety.

### TECHNICAL FIELD

The present disclosure relates to the technical field of networks, and in particular, relates to a method for video interaction and an electronic device.

### BACKGROUND

With the development of network technologies, more and more users are accustomed to acquiring desired information via videos and other means. Users can interact with each other via comments and bullet screens in the video playing process. For example, in online education, students online can ask questions to a teacher in the form of text via a chat window of a video playing interface. The teacher, after seeing the questions, can answer the students' questions either in the lecture or in the form of text in the corresponding chat window.

### SUMMARY

Embodiments of the present disclosure provide a method for video interaction and an electronic device.

According to one aspect of the embodiments of the present disclosure, a method for video interaction is provided. The method includes: displaying an information input interface in response to an information input instruction from a first user account for a target video in a playing state; acquiring, via the information input interface, target information input by the first user account, and generating corresponding interaction information based on the target information and a target video frame picture corresponding to the target information; and sending the interaction information to a second user account.

In some embodiments, the method further includes: acquiring, from the target video, a video frame picture corresponding to a time point at which the information input instruction is received, and determining the video frame picture as the target video frame picture.

In some embodiments, the method further includes: acquiring target playing progress information of the target video, and reading, from the target video, the target video frame picture corresponding to the target playing progress information.

In some embodiments, acquiring the target information input by the first user account includes: receiving input content via the information input interface; acquiring and presenting interaction association information matching the input content; and determining, in response to a received selection instruction, the corresponding target information from the presented interaction association information.

In some embodiments, acquiring the interaction association information matching the input content includes: acquiring a text similarity between the input content and each piece of interaction target information in a pre-stored interaction target information set; and determining a specified number of pieces of interaction target information with relatively high text similarities as matched interaction association information.

In some embodiments, acquiring the text similarity between the input content and the each piece of interaction target information in the pre-stored interaction target information set includes: acquiring a first keyword of the input content and a second keyword of each piece of interaction target information by word segmentation on the input content and each piece of interaction target information in the interaction target information set respectively; and acquiring a text similarity between the first keyword and the second keyword of each piece of interaction target information.

In some embodiments, acquiring the text similarity between the input content and the each piece of interaction target information in the pre-stored interaction target information set includes: acquiring a first component word set of the input content and a second component word set of each piece of interaction target information by word segmentation on the input content and each piece of interaction target information in the interaction target information set respectively; acquiring a word feature vector of each first component word in the first component word set, and acquiring a first statement feature vector corresponding to the input content based on the word feature vector; acquiring a word feature vector of each second component word in the second component word set of each piece of interaction target information, and acquiring a second statement feature vector corresponding to each piece of interaction target information based on the word feature vector; and acquiring a text similarity between the first statement feature vector and each second statement feature vector.

In some embodiments, acquiring the target information input by the first user account includes: acquiring and presenting history interaction information corresponding to video frames associated with the target video frame picture; and determining, in response to a received selection instruction, the corresponding target information from the presented history interaction information.

In some embodiments, acquiring the history interaction information corresponding to the video frames associated with the target video frame picture includes: acquiring a specified number of video frames adjacent to the target video frame picture, and determining the video frames as the video frames associated with the target video frame picture; acquiring history target information corresponding to the associated video frames; determining the number of occurrences of the same history target information; and selecting a specified number of pieces of history target information based on the number of occurrences of the same history target information as the history interaction information corresponding to the target video frame picture.

In some embodiments, acquiring the target information input by the first user account includes: acquiring and presenting interaction recommendation information corresponding to the target video frame picture; and determining, in response to a received selection instruction, the corresponding target information from the presented interaction recommendation information.

In some embodiments, acquiring the interaction recommendation information corresponding to the target video frame picture includes: extracting an image feature in the target video frame picture by image recognition on the target video frame picture; acquiring a video keyword corresponding to the image feature; and generating the corresponding interaction recommendation information based on the video keyword.

In some embodiments, acquiring the target information input by the first user account includes: acquiring and presenting preset interaction information corresponding to the target video; and determining, in response to a received selection instruction, the corresponding target information from the presented preset interaction information.

In some embodiments, acquiring the preset interaction information corresponding to the target video includes: acquiring the preset interaction information corresponding to the target video from a pre-stored video interaction information set, wherein the preset interaction information includes at least one of a video keyword and popular interaction information that are preset for the target video.

In some embodiments, the method further includes: receiving interaction response information that is sent by the second user account and corresponds to the interaction information; and presenting the interaction response information to the first user account.

In some embodiments, the method further includes: receiving interaction information from third user account, and presenting the received interaction information to the first user account; and acquiring interaction response information input by the first user account for the third user account, and sending the interaction response information to the third user account.

In some embodiments, generating the corresponding interaction information based on the target information and the target video frame picture corresponding to the target information includes: generating the corresponding interaction information by combining the target information and the target video frame picture corresponding to the target information in response to an information output instruction from the first user account for the target information.

In some embodiments, the second user account includes either a user account for providing the target video or a user account selected by the first user account.

In some embodiments, sending the interaction information to the second user account includes: sending the interaction information to a server, and triggering the server to send the interaction information to the second user account.

In some embodiments, acquiring the target information input by the first user account includes: sending an information acquisition request to a server in response to a trigger operation performed by the first user account on the information input interface and triggering the server to return at least one of the following information: history interaction information, interaction recommendation information and preset interaction information of the target video, and interaction association information matching the input content received by the information input interface, and presenting the returned information; and determining the corresponding target information from the presented information in response to a received selection instruction.

According to another aspect of embodiments of the present disclosure, a method for video interaction is provided. The method includes: receiving, from a first user account, an information acquisition request generated via a client for a target video in a playing state; and acquiring, in response to the information acquisition request, at least one of the following information: history interaction information, interaction recommendation information, and preset interaction information of the target video, and interaction association information matching input content received by the client, and returning the acquired information to the client, such that the client presents the acquired information to the first user account.

In some embodiments, acquiring the interaction association information matching the input content received by the client includes: acquiring, via a long connection with the client, the input content received by the client; acquiring a text similarity between the input content and each piece of interaction target information in a pre-stored interaction target information set; and determining a specified number of pieces of interaction target information with relatively high text similarities as matched interaction association information.

In some embodiments, acquiring the text similarity between the input content and the each piece of interaction target information in the pre-stored interaction target information set includes: acquiring a first keyword of the input content and a second keyword of each piece of interaction target information by word segmentation on the input content and each piece of interaction target information in the interaction target information set respectively; and acquiring a text similarity between the first keyword and the second keyword of each piece of interaction target information.

In some embodiments, acquiring the text similarity between the input content and the each piece of interaction target information in the pre-stored interaction target information set includes: acquiring a first component word set of the input content and a second component word set of each piece of interaction target information by word segmentation on the input content and each piece of interaction target information in the interaction target information set respectively; acquiring a word feature vector of each first component word in the first component word set, and acquiring a first statement feature vector corresponding to the input content based on the word feature vector; acquiring a word feature vector of each second component word in the second component word set of each piece of interaction target information, and acquiring a second statement feature vector corresponding to each piece of interaction target information based on the word feature vector; and acquiring a text similarity between the first statement feature vector and each second statement feature vector.

In some embodiments, the information acquisition request carries target playing progress information of the target video; and acquiring the history interaction information of the target video includes: reading, based on the target playing progress information of the target video, a target video frame picture corresponding to the target playing progress information from the target video; acquiring a specified number of video frames adjacent to the target video frame picture, and determining the video frames as the video frames associated with the target video frame picture; acquiring history target information corresponding to the associated video frames; and determining the number of occurrences of the same history target information, and selecting a specified number of pieces of history target information based on the number of occurrences of the same history target information as the history interaction information of the target video.

In some embodiments, the information acquisition request carries a target video frame picture; and acquiring the interaction recommendation information of the target video includes: extracting an image feature in the target video frame picture by image recognition on the target video frame picture; acquiring a video keyword corresponding to the image feature; and generating corresponding interaction recommendation information based on the video keyword, and determining the corresponding interaction recommendation information as the interaction recommendation information of the target video.

In some embodiments, acquiring the preset interaction information of the target video includes: acquiring video interaction information corresponding to the target video from a pre-stored video interaction information set, wherein the video interaction information includes at least one of a video keyword and popular interaction information that are preset for the target video.

In some embodiments, the method further includes: receiving interaction information from the first user account, wherein the interaction information includes a target video frame picture and target information corresponding to the target video frame picture; and determining a second user account corresponding to the interaction information, and sending the interaction information to the second user account.

In some embodiments, the method further includes: receiving target playing progress information, which is sent by the first user account via the client, of the target video; reading, based on the target playing progress information, a target video frame picture corresponding to the target playing progress information from the target video; and returning the target video frame picture to the client.

In some embodiments, the method further includes: receiving interaction response information that is returned by the second user account and corresponds to the interaction information; and sending the interaction response information to the first user account.

In some embodiments, the method further includes: receiving interaction information from third user account, and returning the interaction information to the first user account; receiving interaction response information that is sent by the first user account for the interaction information sent by the third user account, and sending the interaction response information to the third user account.

In some embodiments, the method further includes: receiving an information setting request from the second user account for the target video; and acquiring and storing preset interaction information corresponding to the target video.

In some embodiments, the second user account includes either a user account for providing the target video or a user account selected by the first user account.

According to still another aspect of the embodiments of the present disclosure, an apparatus for video interaction is provided. The apparatus includes: a display module, configured to display an information input interface in response to an information input instruction from a first user account for a target video in a playing state; a target information acquiring module, configured to acquire, via the information input interface, target information input by the first user account; an interaction information generating module, configured to generate corresponding interaction information based on the target information and a target video frame picture corresponding to the target information; and a sending module, configured to send the interaction information to a second user account.

In some embodiments, the apparatus further includes: a target video frame picture acquiring module, configured to acquire, from the target video, a video frame picture corresponding to a time point at which the information input instruction is received, and determining the video frame picture as the target video frame picture.

In some embodiments, the target video frame picture acquiring module is configured to acquire target playing progress information of the target video, and read, from the target video, the target video frame picture corresponding to the target playing progress information.

In some embodiments, the target information acquiring module includes: an input content receiving unit, configured to receive input content via the information input interface; an interaction association information acquiring unit, configured to acquire and present interaction association information matching the input content; and a target information determining unit, configured to determine, in response to a received selection instruction, the corresponding target information from the presented interaction association information.

In some embodiments, the interaction association information acquiring unit includes: a similarity acquiring subunit, configured to acquire a text similarity between the input content and each piece of interaction target information in a pre-stored interaction target information set; and an interaction association information determining subunit, configured to determine a specified number of pieces of interaction target information with relatively high text similarities as matched interaction association information.

In some embodiments, the similarity acquiring subunit is configured to: acquire a first keyword of the input content and a second keyword of each piece of interaction target information by word segmentation on the input content and each piece of interaction target information in the interaction target information set respectively; and acquire a text similarity between the first keyword and the second keyword of each piece of interaction target information.

In some embodiments, the similarity acquiring subunit is configured to: acquire a first component word set of the input content and a second component word set of each piece of interaction target information by perform word segmentation on the input content and each piece of interaction target information in the interaction target information set respectively; acquire a word feature vector of each first component word in the first component word set, and acquire a first statement feature vector corresponding to the input content based on the word feature vector; acquire a word feature vector of each second component word in the second component word set of each piece of interaction target information, and acquire a second statement feature vector corresponding to each piece of interaction target information based on the word feature vector; and acquire a text similarity between the first statement feature vector and each second statement feature vector.

In some embodiments, the target information acquiring module includes: a history interaction information acquiring unit, configured to acquire and present history interaction information corresponding to video frames associated with the target video frame picture; and a target information determining unit, configured to determine, in response to a received selection instruction, the corresponding target information from the presented history interaction information.

In some embodiments, the history interaction information acquiring unit is configured to: acquire a specified number of video frames adjacent to the target video frame picture, and determine the video frames as the video frames associated with the target video frame picture; acquire history target information corresponding to the associated video frames; determine the number of occurrences of the same history target information; and select a specified number of pieces of history target information based on the number of occurrences of the same history target information as the history interaction information corresponding to the target video frame picture.

In some embodiments, the target information acquiring module includes: an interaction recommendation information acquiring unit, configured to acquire and present interaction recommendation information corresponding to the target video frame picture; and a target information determining unit, configured to determine, in response to a received selection instruction, the corresponding target information from the presented interaction recommendation information.

In some embodiments, the interaction recommendation information acquiring unit is configured to: extract an image feature in the target video frame picture by image recognition on the target video frame picture; acquire a video keyword corresponding to the image feature; and generate the corresponding interaction recommendation information based on the video keyword.

In some embodiments, the target information acquiring module includes: a preset interaction information acquiring unit, configured to acquire and present preset interaction information corresponding to the target video; and a target information determining unit, configured to determine, in response to a received selection instruction, the corresponding target information from the presented preset interaction information.

In some embodiments, the preset interaction information acquiring unit is configured to: acquire the preset interaction information corresponding to the target video from a pre-stored video interaction information set, wherein the preset interaction information includes at least one of a video keyword and popular interaction information that are preset for the target video.

In some embodiments, the apparatus further includes: an interaction response information receiving module, configured to receive interaction response information that is sent by the second user account and corresponds to the interaction information; and the display module is configured to present the interaction response information to the first user account.

In some embodiments, the apparatus further includes: an interaction information receiving module, configured to receive interaction information from third user account, and present the received interaction information to the first user account; and the sending module is configured to acquire interaction response information input by the first user account for the third user account, and send the interaction response information to the third user account.

In some embodiments, the interaction information generating module is configured to: generate the corresponding interaction information by combining the target information and the target video frame picture corresponding to the target information in response to an information output instruction from the first user account for the target information.

In some embodiments, the second user account includes either a user account for providing the target video or a user account selected by the first user account.

In some embodiments, the sending the interaction information to a second user account includes: sending the interaction information to a server, and triggering the server to send the interaction information to the second user account.

In some embodiments, the sending module is configured to: send an information acquisition request to a server in response to a trigger operation performed by the first user account on the information input interface and triggering the server to return at least one of the following information: history interaction information, interaction recommendation information and preset interaction information of the target video, and interaction association information matching the input content received by the information input interface, and present the returned information; and determine the corresponding target information from the presented information in response to a received selection instruction.

According to yet still another aspect of the embodiments of the present disclosure, an apparatus for video interaction is provided. The apparatus includes: an information receiving module, configured to receive, from a first user account, an information acquisition request generated via a client for a target video in a playing state; an information acquiring module, configured to acquire, in response to the information acquisition request, at least one of the following information: history interaction information, interaction recommendation information, and preset interaction information of the target video, and interaction association information matching input content received by the client; and an information sending module, configured to return the acquired information to the client, such that the client presents the acquired information to the first user account.

In some embodiments, the information acquiring module includes: an input content acquiring unit, configured to acquire, via a long connection with the client, input content received by the client; a similarity acquiring unit, configured to acquire a text similarity between the input content and each piece of interaction target information in a pre-stored interaction target information set; and an interaction association information acquiring unit, configured to determine a specified number of pieces of interaction target information with relatively high text similarities as matched interaction association information.

In some embodiments, the similarity acquiring unit is configured to: acquire a first keyword of the input content and a second keyword of each piece of interaction target information by word segmentation on the input content and each piece of interaction target information in the interaction target information set respectively; and acquire a text similarity between the first keyword and the second keyword of each piece of interaction target information.

In some embodiments, the similarity acquiring unit is configured to: acquire a first component word set of the input content and a second component word set of each piece of interaction target information by word segmentation on the input content and each piece of interaction target information in the interaction target information set respectively; acquire a word feature vector of each first component word in the first component word set, and acquire a first statement feature vector corresponding to the input content based on the word feature vector; acquire a word feature vector of each second component word in the second component word set of each piece of interaction target information, and acquire a second statement feature vector corresponding to each piece of interaction target information based on the word feature vector; and acquire a text similarity between the first statement feature vector and each second statement feature vector.

In some embodiments, the information acquisition request carries target playing progress information of the target video; and the information acquiring module is configured to: read, based on the target playing progress information of the target video, a target video frame picture corresponding to the target playing progress information from the target video; acquire a specified number of video frames adjacent to the target video frame picture, and determine the video frames as the video frames associated with the target video frame picture; acquire history target information corresponding to the associated video frames; determine the number of occurrences of the same history target information; and select a specified number of pieces of history target information based on the number of occurrences of the same history target information as the history interaction information of the target video.

In some embodiments, the information acquisition request carries a target video frame picture; and the information acquiring module is configured to: extract an image feature in the target video frame picture by image recognition on the target video frame picture; acquire a video keyword corresponding to the image feature; and generate corresponding interaction recommendation information based on the video keyword, and determine the interaction recommendation information as the interaction recommendation information of the target video.

In some embodiments, the information acquiring module is further configured to: acquire video interaction information corresponding to the target video from a pre-stored video interaction information set, wherein the video interaction information includes at least one of a video keyword and popular interaction information that are preset for the target video.

In some embodiments, the information receiving module is further configured to: receive interaction information from the first user account, wherein the interaction information includes a target video frame picture and target information corresponding to the target video frame picture; and the information sending module is further configured to: determine a second user account corresponding to the interaction information, and send the interaction information to the second user account.

In some embodiments, the apparatus further includes a target video frame picture acquiring module; the information receiving module is further configured to receive target playing progress information, which is sent by the first user account via the client, of the target video; the target video frame picture acquiring module is configured to read, based on the target playing progress information, a target video frame picture corresponding to the target playing progress information from the target video; and the information sending module is further configured to return the target video frame picture to the client.

In some embodiments, the information receiving module is further configured to receive interaction response information that is sent by the second user account and corresponds to the interaction information; and the information sending module is further configured to send the interaction response information to the first user account.

In some embodiments, the information receiving module is further configured to receive interaction information from third user account; the information sending module is further configured to return the interaction information to the first user account; the information receiving module is further configured to receive interaction response information that is sent by the first user account for the interaction information sent by the third user account; and the information sending module is further configured to send the interaction response information to the third user account.

In some embodiments, the information receiving module is further configured to receive an information setting request from the second user account for the target video; and the information acquiring module is further configured to acquire and store preset interaction information corresponding to the target video.

In some embodiments, the second user account includes either a user account for providing the target video or a user account selected by the first user account.

According to yet still another aspect of the embodiments of the present disclosure, an electronic device is provided. The electronic device includes: a processor; and a memory configured to store at least one instruction executable by the processor. The processor, when loading and executing the at least one instruction, is caused to perform the method for video interaction according to any embodiment of the one aspect.

According to yet still another aspect of the embodiments of the present disclosure, a server is provided. The server includes: a processor; and a memory configured to store at least one instruction executable by the processor. The processor, when loading and executing the at least one instruction, is caused to perform the method for video interaction according to any embodiment of the another aspect.

According to yet still another aspect of the embodiments of the present disclosure, a video interaction system is provided. The video interaction system includes the electronic device according to any embodiment of the above corresponding aspect and the server according to any embodiment of the above corresponding aspect.

According to yet still another aspect of the embodiments of the present disclosure, a storage medium storing at least one instruction therein is provided. The at least one instruction, when loaded and executed by a processor of an electronic device, causes the electronic device to perform the method for video interaction according to any embodiment of the one aspect.

According to yet still another aspect of the embodiments of the present disclosure, a storage medium storing at least one instruction therein is provided. The at least one instruction, when loaded and executed by a processor of a server, causes the server to perform the method for video interaction according to any embodiment of the another aspect.

According to yet still another aspect of the embodiments of the present disclosure, a computer program product including a computer program therein is provided. The computer program is stored in a readable storage medium. The computer program, when read and run by at least one processor of a device from the readable storage medium, causes to cause the device to perform the method for video interaction according to any embodiment of the above corresponding aspect.

It should be understood that the above general description and the following detailed description are only exemplary and explanatory, and should not be construed as a limitation to the present disclosure.

### BRIEF DESCRIPTION OF THE DRAWINGS

The accompanying drawings, which are incorporated in and constitute a part of this description, illustrate the embodiments of the present disclosure and together with the description, serve to explain the principles of the present disclosure, but do not constitute any limitation on the present disclosure.
FIG. 1 is a diagram of an application environment of a method for video interaction according to an exemplary embodiment.
FIG. 2 is a flowchart of a method for video interaction according to an exemplary embodiment.
FIG. 3 is a schematic flowchart of acquiring target information according to an exemplary embodiment.
FIG. 4 is a schematic flowchart of acquiring target information according to another exemplary embodiment.
FIG. 5 is a schematic flowchart of acquiring target information according to still another exemplary embodiment.
FIG. 6 is a schematic flowchart of acquiring target information according to yet another exemplary embodiment.
FIG. 7 is a flowchart of a method for video interaction according to another exemplary embodiment.
FIG. 8 is a flowchart of a method for video interaction according to still another exemplary embodiment.
FIG. 9 is a schematic flowchart of acquiring information in response to an information acquisition request according to an exemplary embodiment.
FIG. 10 is a schematic flowchart of acquiring information in response to an information acquisition request according to another exemplary embodiment.
FIG. 11 is a schematic flowchart of acquiring information in response to an information acquisition request according to still another exemplary embodiment.
FIG. 12 is a schematic diagram of interaction of a method for video interaction according to an exemplary embodiment.
FIG. 13(a) is a schematic diagram of a video interaction interface according to an exemplary embodiment.
FIG. 13(b) is a schematic diagram of a video interaction interface according to an exemplary embodiment.
FIG. 13(c) is a schematic diagram of a video interaction interface according to an exemplary embodiment.
FIG. 13(d) is a schematic diagram of a video interaction interface according to an exemplary embodiment.
FIG. 13(e) is a schematic diagram of a video interaction interface according to an exemplary embodiment.
FIG. 14 is a block diagram of an apparatus for video interaction according to an exemplary embodiment.
FIG. 15 is a block diagram of an apparatus for video interaction according to another exemplary embodiment.
FIG. 16 is a diagram of an internal structure of an electronic device according to an exemplary embodiment.
FIG. 17 is a diagram of an internal structure of a server according to an exemplary embodiment.
FIG. 18 is a block diagram of a video interaction system according to an exemplary embodiment.

### DETAILED DESCRIPTION

To make those of ordinary skill in the art better understand the technical solutions of the present disclosure, the following clearly and completely describes the technical solutions in the embodiments of the present disclosure with reference to the accompanying drawings.

It should be noted that the terms "first," "second," and the like in the specification and claims of the present disclosure and in the accompanying drawings are intended to distinguish between similar objects but do not necessarily indicate a specific order or sequence. It should be understood that the data used in such a way may be exchanged under proper conditions to make it possible to implement the described embodiments of present disclosure in sequences except those illustrated or described herein. The implementations described in the following exemplary embodiments do not represent all implementations consistent with the present disclosure. On the contrary, they are only embodiments of an apparatus and a method detailed in the appended claims and consistent with some aspects of the present disclosure.

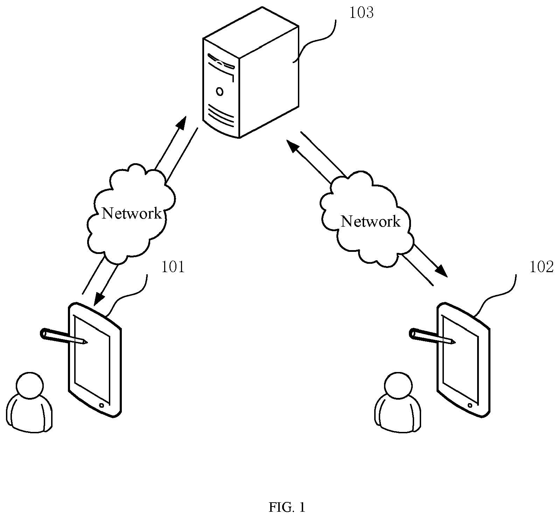

The method for video interaction according to the present disclosure is applicable to the application environment shown in FIG. 1. As shown in FIG. 1, the application environment includes: a first terminal 101, a second terminal 102, and a server 103, wherein both the first terminal 101 and the second terminal 102 can be connected to the server 103 via a network for data interaction. In some embodiments, the first terminal 101 may be a terminal from which a first user account (i.e., a first user account) for watching a video is logged in, e.g., in an online education scenario, the first terminal 101 is a terminal used by an online learning student; the second terminal 102 is a terminal from which a second user account for providing the video or a user account (i.e., a second user account) selected by the first user account is logged in, and in the online education scenario, the second terminal 102 may be a terminal used by an online education teacher. The first terminal 101 and the second terminal 102 are both installed with video clients, and the server 103 is a backend server corresponding to the video clients. In practical applications, the first terminal 101 and the second terminal 102 can both watch a video and provide a video. For ease of description, this implementation is illustrated by using an example in which the first terminal 101 is a user terminal for watching a video and the second terminal 102 is a user terminal for providing a video. The first terminal 101 and the second terminal 102 may be, but are not limited to, various personal computers, laptops, smartphones, smart speakers, smart watches, vehicle-mounted terminals, tablets, and portable wearable devices. The server 103 can be implemented by a standalone server or a server cluster constituted by a plurality of servers. In some embodiments, the server 103 includes, but is not limited to, one server, a plurality of servers, a virtualization center, a cloud computing platform, or the like.

In some embodiments, description is given using an online education scenario as an example. The first terminal 101 is a terminal of a student involved in online education, and the second terminal 102 is a terminal of a teacher involved in online education. The teacher records a live video stream of a real-time online lesson via a video client on the second terminal 102, and sends the live video stream to the server 103. The server 103 may be a server cluster capable of providing a content delivery network (CDN) platform. The server 103 receives and stores the live video stream sent by the second terminal 102. The student logs in the video client from the first terminal 101, selects to enter a live streaming room of the teacher, and triggers the first terminal 101 to initiate a pull request for the live video stream recorded by the second terminal 102. In response to the pull request initiated by the first terminal 101 for the live video stream to the second terminal 102, the server 103 select a server most proximal to the first terminal 101 from the CND platform, and sends the live video stream to the first terminal 101 via the selected server.

The method for video interaction according to the embodiments of the present disclosure is applicable to both the first terminal 101 (i.e., the terminal from which the first user account for watching the video is logged in) and the second terminal 102 (i.e., the user account for providing the video), and is also applicable to the server 103 and implemented via interaction with the first terminal 101 and the second terminal 102.

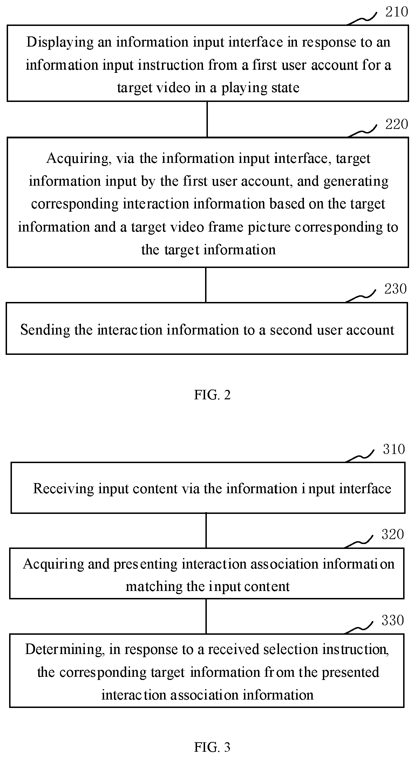

As shown in FIG. 2, a method for video interaction is provided. The embodiment of the present disclosure is described by using an example in which the method is applicable to the terminal from which the first user account for watching the video is logged in (i.e., the first terminal). The method includes the following processes:

In 210, the first terminal displays an information input interface in response to an information input instruction from a first user account for a target video in a playing state.

In some embodiments, a video playing interface is displayed by the terminal from which the first user account for watching the video is logged in (which is referred to as the first terminal hereinafter), and a portal for inputting information is provided on the video playing interface, such that the first user account for watching the video can enter the information input interface via the portal, to raise a question on a knowledge point in the target video in the playing state. The knowledge point refers to a minimum unit for information transfer of knowledge, theories, moralities, ideas, and the like taught by the teacher in the video frame picture at any moment in the online education scenario. For example, the knowledge point includes, but is not limited to, axioms, algorithms, theorems, formulae, historical personages, words, grammas and the like. The information input instruction is an instruction or command instructing the first terminal to display the information input interface. The information input interface refers to a page for raising questions on the target video in the playing state to input specific information content, and the target video refers to a video currently being played. In the embodiment of the present disclosure, in the case that the first user account for watching the target video has a question about a knowledge point in the video, an information input instruction for the target video to the first terminal can be initiated by the first user account by triggering the corresponding portal on the video playing interface, and the first terminal responds to the information input instruction for the target video and displays the information input interface, such that the first user account for watching the video can input specific target information via the information input interface. The portal for inputting information refers to an interactive question asking option on the video playing interface.

In 220, the first terminal acquires, via the information input interface, target information input by the first user account, and generates corresponding interaction information based on the target information and a target video frame picture corresponding to the target information.

The target information is the specific content input by the first user account for watching the video via the information input interface. For example, the target information may be content of a question about a knowledge point in the target video. The target video frame picture is a specific frame picture corresponding to a knowledge point in the target video, i.e., a specific playing screen related to the question content. The interaction information is information to be transmitted in the process of interdependent behaviors. In some embodiments, the first terminal acquires, via the information input interface, the target information input by the first user account, and generates corresponding interaction information based on the target information and the target video frame picture corresponding to the target information.

In 230, the first terminal sends the interaction information to a second user account.

The second user account refers to either a user account for providing the target video or a user account selected by the first user account. For example, the second user account refers to a user account providing the target video, or a user account selected by the first user account. In some embodiments, the first terminal sends the interaction information to the second user account to display the interaction information to the second user account, and instructs the second user account to respond to the interaction information via the corresponding second terminal.

With the technical solution according to the embodiment of the present disclosure, the user can precisely interact with other users based on video content while watching the video, thereby improving video interaction efficiency.

Description is made by using an example in which the method for video interaction is applicable to an online education scenario. In some embodiments, the terminal from which the first user account is logged in is the first terminal used by an online learning student, and the terminal from which the second user account is logged in is the second terminal used by an online education teacher. In the case that the student watching the video has a question about a knowledge point in the target video, the student watching the video can initiate an information input instruction for the target video to the first terminal by triggering a corresponding portal on a video playing interface, and the first terminal responds to the information input instruction for the target video and displays an information input interface. Then the first terminal acquires, via the information input interface, the target information input by the first user account, generates corresponding interaction information based on the target information and a target video frame picture corresponding to the target information, and sends the interaction information to the second terminal used by the teacher. With the technical solution according to the present disclosure, the effect of precise interaction with other users based on the video content during the video watching process is achieved, and video interaction efficiency is improved.

In some embodiments, alternatively, the interaction information may be forwarded by a server to the second user account. In some embodiments, after the first terminal from which the first user account is logged in generates the corresponding interaction information based on the target information and the target video frame picture corresponding to the target information, the first terminal may send the interaction information to the server to trigger the server to forward the interaction information to the second terminal from which the second user account is logged in. In some embodiments, the first terminal from which the first user account is logged in directly sends the interaction information to the server, and the server forwards the interaction information to the second terminal from which the second user account is logged in; and the second terminal receives the interaction information, and displays the interaction information on the video client, such that the second user account logged in from the second terminal can view the interaction information.

In some embodiments, before acquiring the target information input by the first user account, the method further includes: acquiring a target video frame picture. Acquiring the target video frame picture may include: acquiring, from the target video, a video frame picture corresponding to the time point at which the information input instruction is received, and determining the video frame picture as the target video frame picture. In some embodiments, the target video frame picture may be acquired by means of screenshot. For example, the first terminal from which the first user account is logged in triggers an interface provided by the operating system to take a screenshot of the target video in the playing state according to the time point at which the information input instruction is received, such that a video frame picture corresponding to the time point in the target video is acquired and the video frame picture is determined as the target video frame picture.

In some embodiments, acquiring the target video frame picture may further include: acquiring target playing progress information of the target video, and reading, from the target video, the target video frame picture corresponding to the target playing progress information. The target playing progress information refers to playing progress information of a moment corresponding to the specific content of the question about the target video raised by the first user account for watching the video, i.e., time point information of the playback. The target frame video picture is a frame picture, which corresponds to the target playing progress information, in the target video. For example, in the case that the first user account has a question about the knowledge point explained in the target video at the playing progress of 00:03:57, and needs to ask a question, the target playing progress information is 00:03:57, and the target video frame picture is a corresponding video frame picture at the playing progress of 00:03:57 in the target video.

In some embodiments, in the case that the terminal from which the first user account for watching the target video is logged in (i.e., the first terminal) displays the information input interface, in the information input interface, the first user account for watching the target video can operate on the playing progress of the target video to locate the knowledge point in question. For example, in the information input interface, the first user account for watching the target video can acquire the target playing progress information of the target video by dragging a playing progress bar or inputting a target moment at the first terminal, thereby locating the knowledge point in question. The first terminal then acquires the target playing progress information of the target video according to the progress bar in the interface or the input target moment, and reads the target video frame picture corresponding to the target playing progress information from the target video. In some embodiments, the target video frame picture may be read by calling an interface provided by a Media Player module in the operating system of the first terminal, for example, jumping to the time point corresponding to the target playing progress information in the target video via the interface, then acquiring a view corresponding to the time point in the target video, and instructing the system to acquire a screenshot of the view, i.e., the target video frame picture corresponding to the target playing progress information, by re-measuring, laying out and drawing all elements in the view in turn.

In some embodiments, as shown in FIG. 3, in 220, acquiring, by the first terminal, the target information input by the first user account includes the following processes:

In 310, the first terminal receives input content via the information input interface.

The input content refers to content of a question to be asked about the target video, which is input via the information input interface of the first terminal by the first user account for watching the video. The content to be asked includes, but is not limited to, texts, voices, videos, and the like.

In 320, the first terminal acquires and presents interaction association information matching the input content.

The interaction association information refers to interaction target information matching the input content. In some embodiments, the interaction association information may be interaction target information that is selected from a pre-stored interaction target information set and has a relatively high similarity with the input content. The relatively high similarity means that the similarity is greater than a predetermined similarity threshold, or the similarity is ranked at top N places in the ranking of all the interaction target information, wherein N is greater than or equal to 1, and is less than or equal to an integer of a total quantity of the interaction target information. The interaction target information set may be an information set pre-stored locally in the video client. In the embodiment of the present disclosure, the first terminal continuously receives input content via the information input interface, and acquires interaction target information with relatively high similarities with the input content by calculating, by using the input content according to Natural Language Processing (NLP), a text similarity between the input content and each piece of interaction target information in the interaction target information set pre-stored locally in the video client, and presents the acquired interaction target information as the interaction association information to the first user account.

In some embodiments, acquiring the interaction association information matching the input content may include: acquiring a first keyword of the input content and a second keyword of each piece of interaction target information by word segmentation on the input content and each piece of interaction target information in the interaction target information set respectively, then calculating a text similarity between the first keyword and the second keyword of each piece of interaction target information, sorting the interaction target information in the interaction target information set according to values of the text similarities, and determining a specified number of pieces of interaction target information in the front (i.e., with relatively high text similarities) as the interaction association information matching the input content.

In some embodiments, the text similarity may alternatively be calculated based on a feature vector. In some embodiments, a first component word set of the input content and a second component word set of each piece of interaction target information are acquired by word segmentation respectively on the input content and each piece of interaction target information in the interaction target information set. A word feature vector of each first component word in the first component word set is acquired based on the Word2vec technology of deep learning, and a first statement feature vector corresponding to the input content is acquired by summing and averaging the word feature vectors of all the first component words in the first component word set. By the same method, a word feature vector of each second component word in the second component word set of each piece of interaction target information is acquired, thereby acquiring a second statement feature vector corresponding to each piece of interaction target information. Further, a text similarity between the first statement feature vector and each second statement feature vector is calculated, that is, a cosine value of an angle between the first statement feature vector and each second statement feature vector is calculated, wherein a larger cosine value indicates a higher similarity between the two.

In 330, the first terminal determines the corresponding target information from the presented interaction association information in response to a received selection instruction.

In some embodiments, the interaction association information is presented to the first user account such that the first user account makes a selection when asking a question, and hence quickly generates the target information for the question. The selection instruction may be an operation of selecting, by the first user account, a piece of interaction association information from the interaction association information presented by the first terminal, and the first terminal determines the interaction association information selected by the first user account as the corresponding target information in response to the received selection instruction.

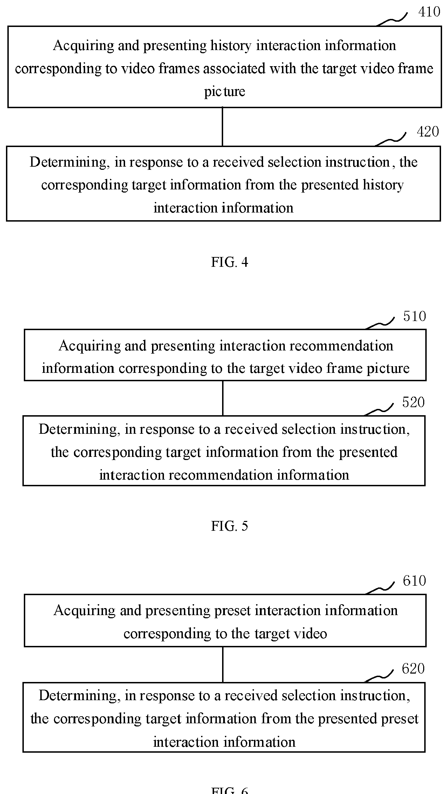

In some embodiments, as shown in FIG. 4, in 220, acquiring, by the first terminal, the target information input by the first user account includes the following processes:

In 410, the first terminal acquires and presents history interaction information corresponding to video frames associated with the target video frame picture.

The video frames associated with the target video frame picture refer to one or a plurality of frame pictures in the target video which are related to the target video frame picture, for example, a plurality of frame pictures in the target video which are within a preset duration adjacent to the target video frame picture. The history interaction information refers to history target information that has been issued by other user accounts based on the video frames associated with the target video frame picture.

In some embodiments, acquiring the history interaction information corresponding to video frames associated with the target video frame picture may include: acquiring a specified number of video frames adjacent to the target video frame picture, wherein the specified number may be set according to an actual scenario. For example, 10 frames of pictures before the target video frame picture and 10 frames of pictures after the target video frame picture may be acquired and determined as the video frames associated with the target video frame picture. Then, the history target information corresponding to the associated video frames is acquired, that is, it is queried whether other user accounts have issued history target information with respect to the video frames associated with the target video frame picture; and in the case that other user accounts have issued history target information with respect to the associated video frames, such history target information is acquired and determined as the history interaction information. In the case that a large amount of history target information is acquired via the query, based on the number of occurrences of the same history target information, a specified number of pieces of history target information with relatively frequent occurrences may be selected as the history interaction information corresponding to the target video frame picture and presented to the first user account. That is, a specified number of pieces of history target information is selected based on the number of occurrences of the same history target information as the history interaction information corresponding to the target video frame picture. For example, all pieces of the history target information are ranked in a descending order of the number of occurrences of the same history target information, and a specified number of pieces of history target information that are ranked ahead among all the pieces of the history target information are selected as the history interaction information corresponding to the target video frame picture.

In 420, the first terminal determines the corresponding target information from the presented history interaction information in response to a received selection instruction.

In some embodiments, the selection instruction may be an operation of selecting, by the first user account, a piece of history interaction information from the history interaction information presented by the first terminal, and the first terminal determines the history interaction information selected by the first user account as the corresponding target information in response to the received selection instruction.

In some embodiments, as shown in FIG. 5, in 220, acquiring, by the first terminal, the target information input by the first user account includes the following processes:

In 510, the first terminal acquires and presents interaction recommendation information corresponding to the target video frame picture.

The interaction recommendation information is question information recommended to the first user account for watching the video. In some embodiments, the interaction recommendation information may be acquired based on image features of the target video frame picture, making the interaction recommendation information strongly relevant to the target video frame picture.

In some embodiments, the first terminal from which the first user account is logged in extracts an image feature in the target video frame picture by image recognition on the target video frame picture and acquires a video keyword corresponding to the image feature, thereby generating the corresponding interaction recommendation information based on the video keyword. Image recognition can be achieved by using an Open Source Computer Vision Library (OpenCV) technology. Image recognition is performed on the target video frame picture by using the OpenCV technology, to recognize image features such as text, an object or a character in the target video frame picture, and extract the recognized image features.

In some embodiments, the target video is a history lesson video of online education; and in the case that the portrait of Lu Kang is shown in the video at a moment and the first user account for watching the video wants to ask a question, the first terminal acquires the corresponding target video frame picture (i.e., the picture corresponding to the portrait of Lu Kang shown in the video at a moment) based on the operation of the first user account, and performs image recognition on the target video frame picture; and in the case that the character in the picture is recognized as Lu Kang, "Lu Kang" is used as the video keyword corresponding to the target video frame picture. Then, corresponding interaction recommendation information is generated based on the video keyword. For example, in the case that the character in the picture is recognized as "Lu Kang," interaction recommendation information like "Lu Kang's history evaluation" can be generated and presented to the first user account.

In 520, the first terminal determines the corresponding target information from the presented interaction recommendation information in response to a received selection instruction.

The selection instruction may be an operation of selecting, by the first user account, a piece of interaction recommendation information from the interaction recommendation information presented by the first terminal, and the first terminal determines the interaction recommendation information selected by the first user account as the corresponding target information in response to the received selection instruction.

In some embodiments, as shown in FIG. 6, in 220, acquiring, by the first terminal, the target information input by the first user account includes the following processes:

In 610, the first terminal acquires and presents preset interaction information corresponding to the target video.

The preset interaction information may be one of a video keyword and popular interaction information that are preset for the target video. In some embodiments, in the case that the first user account for watching the video triggers the information input interface displayed by the first terminal and is ready to input the target information, for example, in the case that the first user account moves the cursor to a corresponding text input box in the information input interface, the first terminal acquires the video keyword and popular interaction information that are preset for the target video from a pre-stored video interaction information set based on the trigger, and presents the acquired video keyword and popular interaction information to the first user account as the preset interaction information. The preset interaction information set may include video keywords and popular interaction information that are preset for various videos.

In 620, the first terminal determines the corresponding target information from the presented preset interaction information in response to a received selection instruction.

The selection instruction may be an operation of selecting, by the first user account, a piece of preset interaction information from the preset interaction information presented by the first terminal, and the first terminal determines the preset interaction information selected by the first user account as the corresponding target information in response to the received selection instruction.

In some embodiments, in 220, generating, by the first terminal, the corresponding interaction information based on the target information and a target video frame picture corresponding to the target information includes: generating the corresponding interaction information by combining the target information and the target video frame picture corresponding to the target information in response to an information output instruction from the first user account for the target information. The information output instruction is an instruction or command instructing the first terminal to output the target information. In some embodiments, after the first terminal acquires the target information, the first user account may trigger the information output command for the target information to the first terminal, such that the first terminal generates the corresponding interaction information by combining the target information and the target video frame picture corresponding to the target information, i.e., combining the target information with the corresponding target video frame picture.

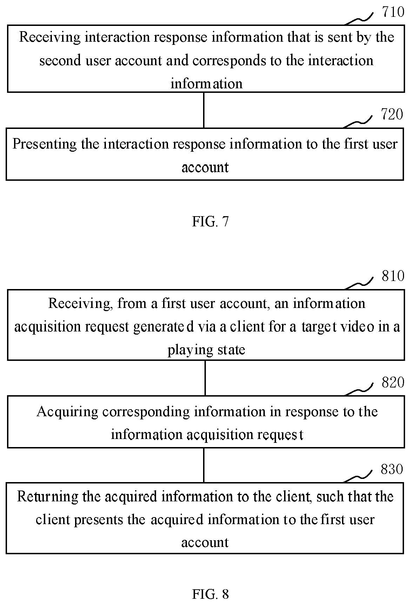

In some embodiments, as shown in FIG. 7, in 230, in response to sending the interaction information by the first terminal to the second user account, the method may further include the following processes:

In 710, the first terminal receives interaction response information that is sent by the second user account and corresponds to the interaction information.

The interaction response information is a response made by the second user account that receives the interaction information based on the interaction information. In some embodiments, in the case that the interaction information is question information, the interaction response information is answer information to the question information.

In 720, the first terminal presents the interaction response information to the first user account.

In some embodiments, in response to sending the interaction information to the second user account via the first terminal, the first user account may further receive, via the first terminal, the interaction response information that is returned by the second user account and corresponds to the interaction information, and present the interaction response information to the first user account.

In some embodiments, in the case that the terminal from which the first user account is logged in is a terminal providing the video or a terminal used by an online education teacher, the method may further include: receiving interaction information from third user account, and presenting the interaction information to the first user account; and acquiring interaction response information input by the first user account for the third user account, and sending the interaction response information to the third user account. Third user account refers to a user account for watching the video. In some embodiments, after the user account for watching the video initiates corresponding interaction information to the first user account based on watched video content, the terminal from which the first user account is logged in may receive and present the interaction information, to instruct the first user account to input corresponding interaction response information with respect to the presented interaction information, and send the interaction response information to the third user account.

In some embodiments, acquiring the target information input by the first user account includes: sending an information acquisition request to a server in response to a trigger operation performed by the first user account on the information input interface and triggering the server to return at least one of the following information: history interaction information, interaction recommendation information and preset interaction information of the target video, and interaction association information matching the input content received by the information input interface, and presenting the returned information; and determining the corresponding target information from the presented information in response to a received selection instruction.

FIG. 8 is a flowchart of a method for video interaction according to an exemplary embodiment. As shown in FIG. 8, description is made by using an example in which the method is applicable to the server in FIG. 1. The method includes the following processes:

In 810, the server receives an information acquisition request generated via a client for a target video in a playing state from a first user account.

In some embodiments, a video playing interface is displayed via a client by the first user account for watching the video, and a portal for inputting information is provided on the video playing interface, such that the first user account for watching the video can enter the information input interface via the portal and trigger the client to generate the information acquisition request, so as to send the information acquisition request to the server. The portal for inputting information refers to an interactive question asking option on the video playing interface. The information acquisition request includes a request for acquiring at least one of the following information: history interaction information, interaction recommendation information, and preset interaction information of the target video, and interaction association information matching input content received by the client.

In 820, the server acquires corresponding information in response to the information acquisition request.

The server acquires the corresponding information by performing a corresponding process in response to the received information acquisition request.

In 830, the server returns the acquired information to the client, such that the client presents the acquired information to the first user account.

In some embodiments, the server acquires the corresponding information and then returns the information to the client which the first user account is logged in, such that the client presents the information to the first user account.

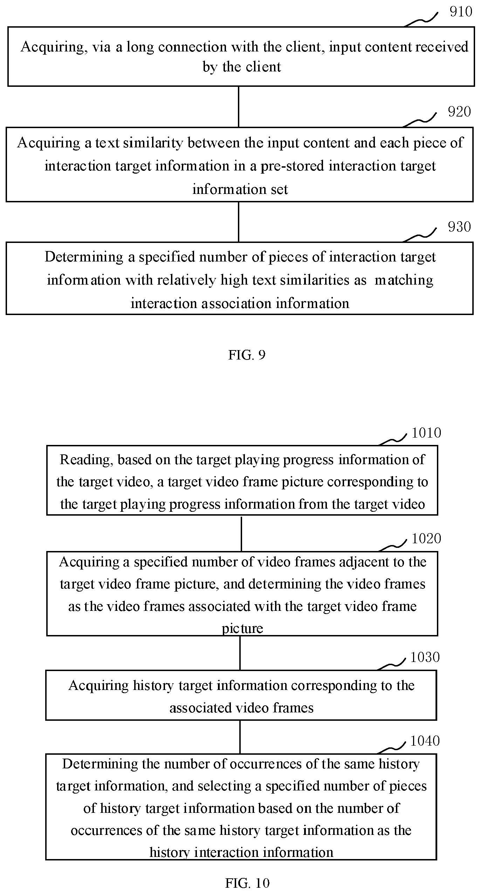

In some embodiments, as shown in FIG. 9, in the case that the information acquisition request is a request for acquiring interaction association information matching input content received by the client, the method includes the following processes:

In 910, the server acquires, via a long connection with the client, input content received by the client.

The input content is received by the client via the information input interface. In some embodiments, the input content refers to content of a question to be asked, which is input via the information input interface of the client by the first user account for watching the video. The content to be asked includes, but not limited to, texts, voices, videos, and the like. The server continuously acquires, via the long connection with the client, input content received by the client via the information input interface.

In 920, the server acquires a text similarity between the input content and each piece of interaction target information in a pre-stored interaction target information set.

In some embodiments, a first keyword of the input content and a second keyword of each piece of interaction target information may be acquired by word segmentation on the input content and each piece of interaction target information in the interaction target information set respectively, and then the text similarity between each piece of interaction target information and the input content is acquired by calculating a text similarity between the first keyword and the second keyword of each piece of interaction target information.

In some embodiments, a first component word set of the input content and a second component word set of each piece of interaction target information are acquired by word segmentation on the input content and each piece of interaction target information in the interaction target information set respectively. A word feature vector of each first component word in the first component word set is acquired based on the Word2vec technology of deep learning, and a first statement feature vector corresponding to the input content is acquired by summing and averaging the word feature vectors of all the first component words in the first component word set. By the same method, a word feature vector of each second component word in the second component word set of each piece of interaction target information is acquired, thereby acquiring a second statement feature vector corresponding to each piece of interaction target information. Further, a text similarity between the first statement feature vector and each second statement feature vector is calculated, that is, a cosine value of an angle between the first statement feature vector and each second statement feature vector is calculated, wherein a larger cosine value indicates a higher similarity between the two.

In 930, the server determines a specified number of pieces of interaction target information with relatively high text similarities as matched interaction association information.

The interaction association information refers to interaction target information matching the input content. In some embodiments, the interaction association information is a specified number of pieces of interaction target information that are selected from a pre-stored interaction target information set and have relatively high similarities with the input content. The relatively high similarity means that the similarity is greater than a predetermined similarity threshold, or the similarity is ranked at top N places in the ranking of all the interaction target information, wherein N is greater than or equal to 1, and is less than or equal to an integer of a total quantity of the interaction target information.

In some embodiments, as shown in FIG. 10, in the case that the information acquisition request carries target playing progress information of the target video, acquiring the history interaction information of the target video includes the following processes:

In 1010, the server reads, based on the target playing progress information of the target video, a target video frame picture corresponding to the target playing progress information from the target video.

The target playing progress information refers to playing progress information of a moment corresponding to the specific content of the question about the target video raised by the first user account for watching the video, i.e., time point information of the playback. The target frame video picture is a frame picture, which corresponds to the target playing progress information, in the target video. Based on the target playing progress information of the target video carried in the information acquisition request, the server reads, from the target video, the target video frame picture corresponding to the target playing progress information.

In 1020, the server acquires a specified number of video frames adjacent to the target video frame picture and determines the video frames as the video frames associated with the target video frame picture.

In some embodiments, the server acquires a specified number of video frames adjacent to the target video frame picture, wherein the specified number may be set according to an actual scenario. For example, 10 frames of pictures before the target video frame picture and 10 frames of pictures after the target video frame picture may be acquired and determined as the video frames associated with the target video frame picture.

In 1030, the server acquires history target information corresponding to the associated video frames.

The history interaction information refers to history target information that has been issued by other user accounts based on the video frames associated with the target video frame picture. In some embodiments, the server acquires the history target information corresponding to the associated video frames by querying queries history records.

In 1040, the server determines the number of occurrences of the same history target information, and selects a specified number of pieces of history target information based on the number of occurrences of the same history target information as the history interaction information.

That is, the server selects a specified number of pieces of history target information based on the number of occurrences of the same history target information as the history interaction information of the target video. For example, all pieces of the history target information are ranked in a descending order of the number of occurrences of the same history target information, and a specified number of pieces of history target information that are ranked ahead among all the pieces of the history target information are selected as the history interaction information of the target video.

In the case that a large amount of history target information is acquired via the query, based on the number of occurrences of the same history target information, a specified number of pieces of history target information with relatively frequent occurrences are selected as the history interaction information of the target video frame picture and the corresponding history interaction information is returned to the client. In some embodiments, selecting the specified number of pieces of history target information with the relative frequent occurrences refers to ranking all the pieces of history target information based on the count of numbers that each piece of history target information is mentioned, and selecting a specified number of pieces of history target information that are ranked ahead among all the pieces of history target information as the history interaction information of the target video.

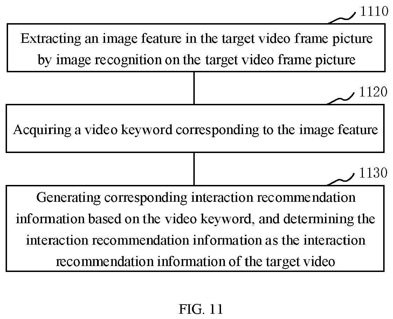

In some embodiments, as shown in FIG. 11, the information acquisition request carries the target video frame picture, and interaction recommendation information of the target video is acquired by the following processes:

In 1110, the server extracts an image feature in the target video frame picture by image recognition on the target video frame picture.

Image recognition can be achieved by using an Open Source Computer Vision Library (OpenCV) technology. Image recognition is performed on the target video frame picture by using the OpenCV technology, to recognize image features such as text, an object or a character in the target video frame picture, and extract the recognized image features.

In 1120, the server acquires a video keyword corresponding to the image feature.

In 1130, the server generates corresponding interaction recommendation information based on the video keyword as the interaction recommendation information of the target video.

In some embodiments, the target video is a history lesson video of online education; and in the case that the portrait of Lu Kang is shown in the video at a moment and the first user account for watching the video wants to ask a question, the first terminal acquires the corresponding target video frame picture (i.e., the picture corresponding to the portrait of Lu Kang shown in the video at a moment) based on the operation of the first user account, and sends an information acquisition request for acquiring interaction recommendation information to the server. The server performs image recognition on the target video frame picture based on the target video frame picture in the request; and in the case that the character in the picture is recognized as Lu Kang, "Lu Kang" is used as the video keyword corresponding to the target video frame picture. Then, corresponding interaction recommendation information is generated based on the video keyword. For example, in the case that the character in the picture is recognized as "Lu Kang," interaction recommendation information like "Lu Kang's history evaluation" can be generated, and the corresponding interaction recommendation information is returned to the client.

In some embodiments, acquiring the preset interaction information of the target video includes: acquiring the preset interaction information corresponding to the target video from a pre-stored video interaction information set, wherein the preset interaction information includes at least one of a video keyword and popular interaction information that are preset for the target video. In some embodiments, in the case that the first user account for watching the video triggers the information input interface displayed by the client and is ready to input the target information, for example, in the case that the first user account moves the cursor to a corresponding text input box in the information input interface, the client initiates, based on the trigger, an information acquisition request for acquiring the preset interaction information to the server. The server acquires the video keyword and popular interaction information that are preset for the target video from the pre-stored video interaction information set, and returns the corresponding preset interaction information to the client.

In some embodiments, the server may further receive interaction information from the first user account, determine a second user account corresponding to the interaction information, and send the interaction information to the second user account. The interaction information includes a target video frame picture and target information corresponding to the target video frame picture. The second user account includes either a user account for providing the target video or a user account selected by the first user account. For example, the second user account refers to a user account providing the target video, or a user account selected by the first user account.

With the technical solution according to the embodiment of the present disclosure, the effect of precise interaction with the specified user for the video content is not only achieved, but also the video interaction efficiency is improved.

In some embodiments, the server may further receive target playing progress information, which is sent by the first user account via the client, of the target video, and reads, based on the target playing progress information, a target video frame picture corresponding to the target playing progress information from the target video, thereby returning the target video frame picture to the client. In some embodiments, the first user account displays the information input interface via the client. In the information input interface, the first user account for watching the target video can operate on the playing progress of the target video to locate the knowledge point in question. The knowledge point refers to a minimum unit for information transfer of knowledge, theories, moralities, ideas, and the like taught by the teacher in the video frame picture at any moment in the online education scenario. For example, the knowledge point includes, but is not limited to, axioms, algorithms, theorems, formulae, historical personages, words, grammas and the like. For example, in the information input interface, the first user account for watching the target video can acquire the target playing progress information of the target video by dragging a playing progress bar or inputting a target moment to trigger the client, and then send the target playing progress information to the server via a short connection between the client and the server. The server reads, based on the target playing progress information, a target video frame picture corresponding to the target playing progress information from the target video, to locate the knowledge point in question and return the target video frame picture to the client.

In some embodiments, in response to sending the interaction information of the first user account to the second user account, the server may further receive interaction response information that is returned by the second user account and corresponds to the interaction information, and send the interaction response information to the first user account.

In some embodiments, the server may further receive interaction information from third user account and return the interaction information to the first user account. The server may also receive interaction response information from the first user account with respect to the interaction information sent by the third user account, and send the interaction response information to the third user account.

In some embodiments, before receiving the information acquisition request, the server may further receive an information setting request from the second user account for the target video, and acquire and store preset interaction information corresponding to the target video.

The information setting request is a request for setting preset interaction information for the target video in advance. The second user account may be a user account for providing the target video or a user account for teaching in an online education scenario. The preset interaction information refers to target information that is preset for the target video for video interaction, and includes a video keyword, popular interaction information, and the like that are preset for the target video. In some embodiments, the server receives the information setting request from the second user account for the target video, and acquires and stores the preset interaction information corresponding to the target video. Therefore, after receiving the information acquisition request from the client, the server may return the corresponding information to the client based on the stored preset interaction information, such that the client presents the information to the first user account.

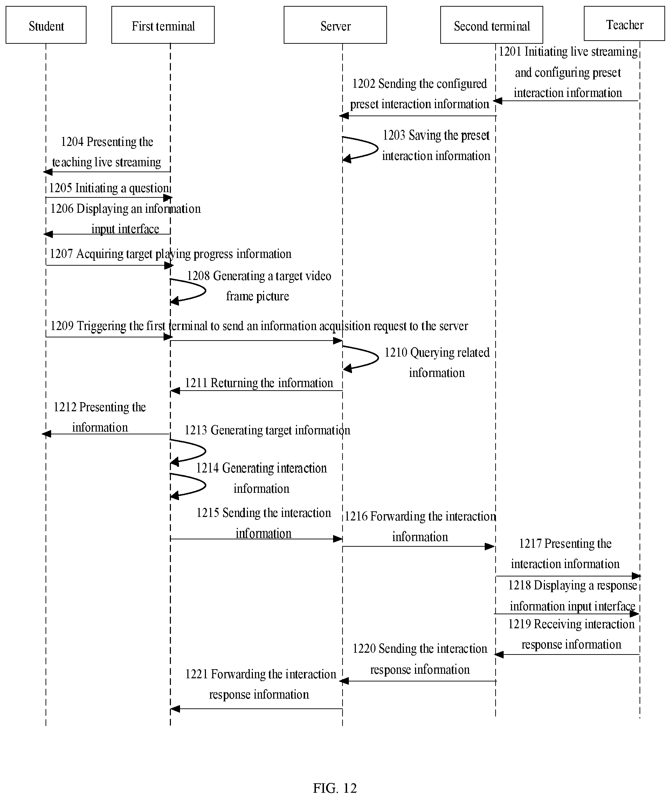

In some embodiments, as shown in FIG. 12, description is made by using an example in which a teacher side (i.e., the second terminal) initiates a live teaching video and a student side (i.e., the first terminal) watches the live teaching video in a live streaming scenario of online education. The method includes the following processes:

In 1201, a teacher initiates live teaching via a second terminal, and sets preset interaction information for a live video (i.e., target video).

In some embodiments, the teacher side may set the preset interaction information before or during the process of initiating live teaching, which is not limited in the embodiments of the present disclosure.

In 1202, the second terminal sends the preset interaction information of the live video to a server.

In 1203, the server saves the preset interaction information for the live video.

In 1204, a student watches the live teaching via a first terminal, i.e., the first terminal shows the live teaching (i.e., the target video) to the student.

In 1205, the student initiates a question with respect to the live video in a playing state.

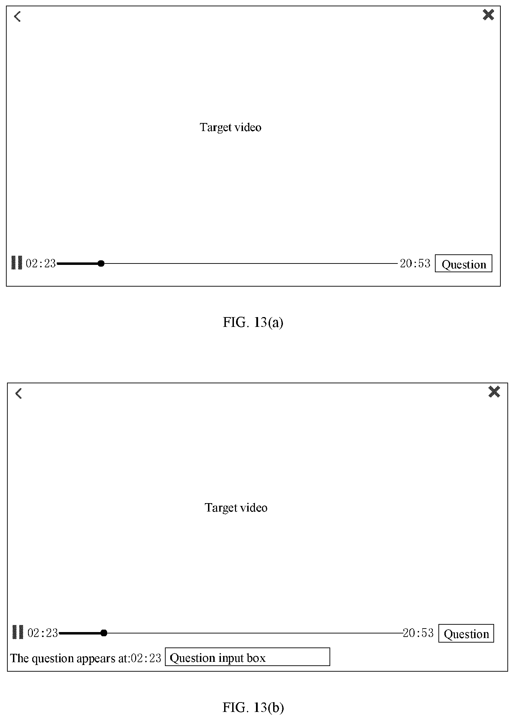

In some embodiments, the question can be initiated by clicking or tapping a corresponding portal on a live streaming interface of the first terminal. The specific portal may be a "Question" button in the live streaming interface as shown in FIG. 13 (a).

In 1206, the first terminal displays an information input interface in response to a trigger instruction for the live video.

That is, the interface displayed by the first terminal jumps from FIG. 13(a) to FIG. 13(b).

In 1207, the student locates target playing progress information by dragging a progress bar in FIG. 13(b) or inputting a moment, and triggers the first terminal to generate a target video frame picture by clicking or tapping a question input box, i.e., the first terminal acquires the target playing progress information.

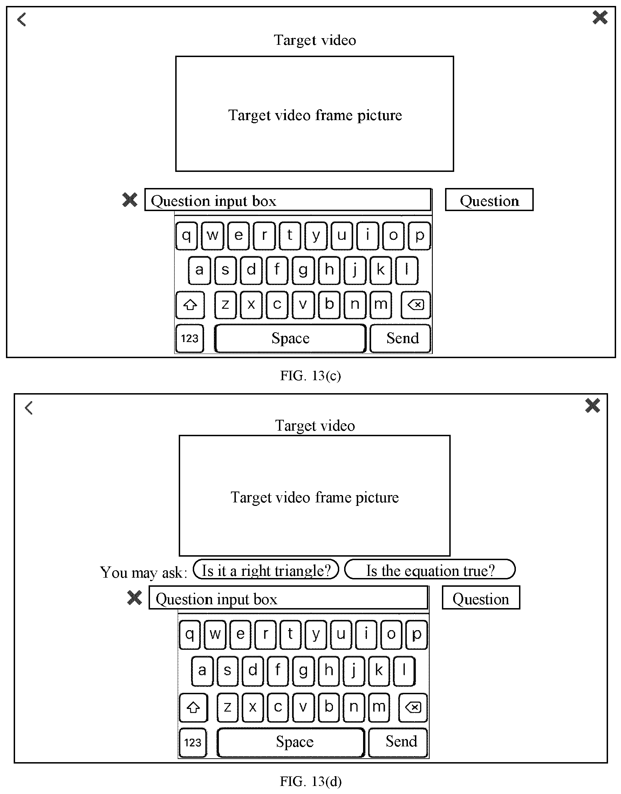

In 1208, the first terminal generates a target video frame picture corresponding to the target playing progress information based on the operation of clicking or tapping the question input box, and jumps to the page as shown in FIG. 13 (c).

In some embodiments, the page may be displayed on top of the live streaming interface in a floating manner.

In 1209, the first terminal is triggered to send an information acquisition request to the server.

In the page shown in FIG. 13(c), the students can input specific target question content via the question input box. In the embodiment of the present disclosure, in order to facilitate the student to input the target question content (i.e., target information), various manners of predicting and presenting interaction information (including at least one of history interaction information, interaction recommendation information and preset interaction information of the live video, and interaction association information matching the input content received in the information input interface) are provided. For example, in the page shown in FIG. 13(c), once the question input box is clicked or tapped, the first terminal is triggered to send, to the server, an information acquisition request for the history interaction information, interaction recommendation information or preset interaction information of the live video, and the information acquisition request may carry the target playing progress information and the corresponding target video frame picture. Once content is entered in the question input box, the first terminal is triggered to send, to the server, an information acquisition request for the interaction association information matching the input content.

In 1210, the server queries related information based on the trigger operation.

In some embodiments, the server queries the history interaction information corresponding to the target playing progress information based on the operation of clicking or tapping the question input box, query the interaction recommendation information corresponding to the target video frame picture, and query the preset interaction information corresponding to the live video. The server may also query the interaction association information matching the input content based on the operation of entering content in the question input box.

In 1211, the server returns the information acquired via query to the first terminal.

In 1212, the first terminal presents the corresponding information.

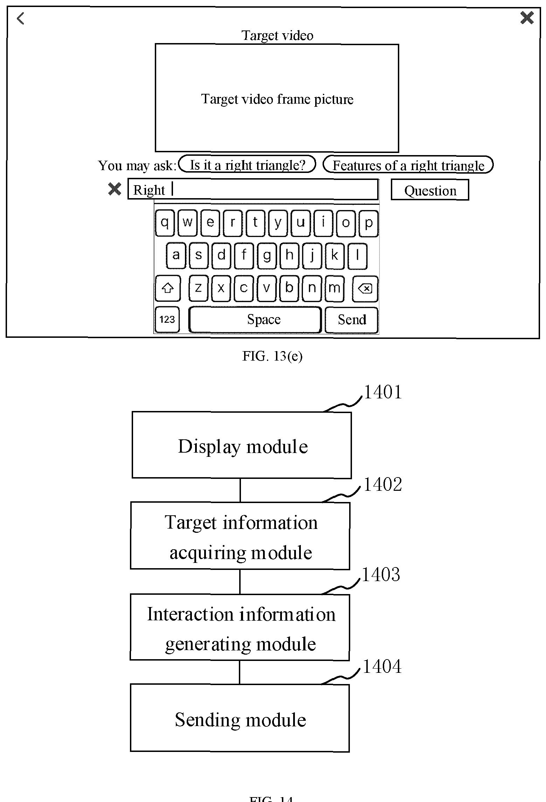

For details, reference may be made to the pages shown in FIG. 13(d) and FIG. 13(e).

In 1213, the first terminal quickly generates target information based on a selection of the presented information.

In 1214, the first terminal generates interaction information by combining the target information and the corresponding target video frame picture.

In 1215, the first terminal sends the interaction information to the server based on a trigger operation of the student (i.e., triggering the "Send" button shown in FIG. 13(e)).

In 1216, the server forwards the interaction information to the second terminal.

In 1217, the second terminal presents the interaction information to the teacher.

In 1218, the second terminal displays a response information input interface based on the teacher's trigger on the interaction information and presents the target question content and the target video frame picture in the interface.

In 1219, the second terminal receives interaction response information input by the teacher via the response input interface.

In 1220, the second terminal returns the interaction response information to the server.

In 1221, the server forwards the interaction response information to the first terminal.

With the technical solution according to the embodiment of the present disclosure, the video interaction efficiency is greatly improved, and the effect of precise interaction with other users based on the video content during the video watching process is achieved.

It should be understood that although the processes in the flowcharts of FIG. 1 to FIG. 12 are shown in sequence as indicated by the arrows, these processes are not necessarily performed in sequence as indicated by the arrows. Unless explicitly stated herein, the execution of these processes is not strictly limited in sequence, and these processes may be executed in other sequences. Moreover, at least some processes in FIG. 1 to FIG. 12 may include a plurality of sub-processes or a plurality of stages, which are not necessarily performed at the same time, but may be performed at different time points. The execution order of these sub-processes or stages is not necessarily sequential, and these sub-processes or stages may be executed alternately with other processes or at least some sub-processes or stages of other processes.

FIG. 14 shows an apparatus for interaction according to an exemplary embodiment. The apparatus includes: a display module 1401, configured to display an information input interface in response to an information input instruction from a first user account for a target video in a playing state; a target information acquiring module 1402, configured to acquire, via the information input interface, target information input by the first user account; an interaction information generating module 1403, configured to generate corresponding interaction information based on the target information and a target video frame picture corresponding to the target information; and a sending module 1404, configured to send the interaction information to a second user account.

In some embodiments, the apparatus further includes: a target video frame picture acquiring module, configured to acquire, from the target video, a video frame picture corresponding to a time point at which the information input instruction is received, and determine the video frame picture as the target video frame picture.

In some embodiments, the target video frame picture acquiring module is configured to acquire target playing progress information of the target video, and read, from the target video, the target video frame picture corresponding to the target playing progress information.

In some embodiments, the target information acquiring module includes: an input content receiving unit, configured to receive input content via the information input interface; an interaction association information acquiring unit, configured to acquire and present interaction association information matching the input content; and a target information determining unit, configured to determine, in response to a received selection instruction, the corresponding target information from the presented interaction association information.

In some embodiments, the interaction association information acquiring unit includes: a similarity acquiring subunit, configured to acquire a text similarity between the input content and each piece of interaction target information in a pre-stored interaction target information set; and an interaction association information determining subunit, configured to determine a specified number of pieces of interaction target information with relatively high text similarities as matched interaction association information.

In some embodiments, the similarity acquiring subunit is configured to: acquire a first keyword of the input content and a second keyword of each piece of interaction target information by word segmentation on the input content and each piece of interaction target information in the interaction target information set respectively; and acquire a text similarity between the first keyword and the second keyword of each piece of interaction target information.

In some embodiments, the similarity acquiring subunit is configured to: acquire a first component word set of the input content and a second component word set of each piece of interaction target information by word segmentation on the input content and each piece of interaction target information in the interaction target information set respectively; acquire a word feature vector of each first component word in the first component word set, and acquire a first statement feature vector corresponding to the input content based on the word feature vector; acquire a word feature vector of each second component word in the second component word set of each piece of interaction target information, and acquire a second statement feature vector corresponding to each piece of interaction target information based on the word feature vector; and acquire a text similarity between the first statement feature vector and each second statement feature vector.

In some embodiments, the target information acquiring module includes: a history interaction information acquiring unit, configured to acquire and present history interaction information corresponding to video frames associated with the target video frame picture; and a target information determining unit, configured to determine, in response to a received selection instruction, the corresponding target information from the presented history interaction information.

In some embodiments, the history interaction information acquiring unit is configured to: acquire a specified number of video frames adjacent to the target video frame picture, and determine the video frames as the video frames associated with the target video frame picture; acquire history target information corresponding to the associated video frames; determine the number of occurrences of the same history target information; and select a specified number of pieces of history target information based on the number of occurrences of the same history target information as the history interaction information corresponding to the target video frame picture.

In some embodiments, the target information acquiring module includes: an interaction recommendation information acquiring unit, configured to acquire and present interaction recommendation information corresponding to the target video frame picture; and a target information determining unit, configured to determine, in response to a received selection instruction, the corresponding target information from the presented interaction recommendation information.

In some embodiments, the interaction recommendation information acquiring unit is configured to: extract an image feature in the target video frame picture by image recognition on the target video frame picture; acquire a video keyword corresponding to the image feature; and generate the corresponding interaction recommendation information based on the video keyword.

In some embodiments, the target information acquiring module includes: a preset interaction information acquiring unit, configured to acquire and present preset interaction information corresponding to the target video; and a target information determining unit, configured to determine, in response to a received selection instruction, the corresponding target information from the presented preset interaction information.

In some embodiments, the preset interaction information acquiring unit is configured to: acquire the preset interaction information corresponding to the target video from a pre-stored video interaction information set, wherein the preset interaction information includes at least one of a video keyword and popular interaction information that are preset for the target video.

In some embodiments, the apparatus further includes: an interaction response information receiving module, configured to receive interaction response information that is sent by the second user account and corresponds to the interaction information; and the display module is configured to present the interaction response information to the first user account.

In some embodiments, the apparatus further includes: an interaction information receiving module, configured to receive interaction information from third user account, and present the received interaction information to the first user account; and the sending module is configured to acquire interaction response information input by the first user account for the third user account, and send the interaction response information to the third user account.

In some embodiments, the interaction information generating module is configured to: generate the corresponding interaction information by combining the target information and the target video frame picture corresponding to the target information in response to an information output instruction from the first user account for the target information.

In some embodiments, the second user account includes either a user account for providing the target video or a user account selected by the first user account.

In some embodiments, sending the interaction information to the second user account includes: sending the interaction information to a server, and triggering the server to send the interaction information to the second user account.

In some embodiments, the sending module is configured to: send an information acquisition request to a server in response to a trigger operation performed by the first user account on the information input interface and trigger the server to return at least one of the following information: history interaction information, interaction recommendation information and preset interaction information of the target video, and interaction association information matching the input content received by the information input interface, and present the returned information; and determine the corresponding target information from the presented information in response to a received selection instruction.

Details about operations performed by the modules in the apparatus in the above embodiment have been given in detail in the embodiments of the related method (the method embodiments corresponding to FIG. 1 to FIG. 7), which are not described herein again.

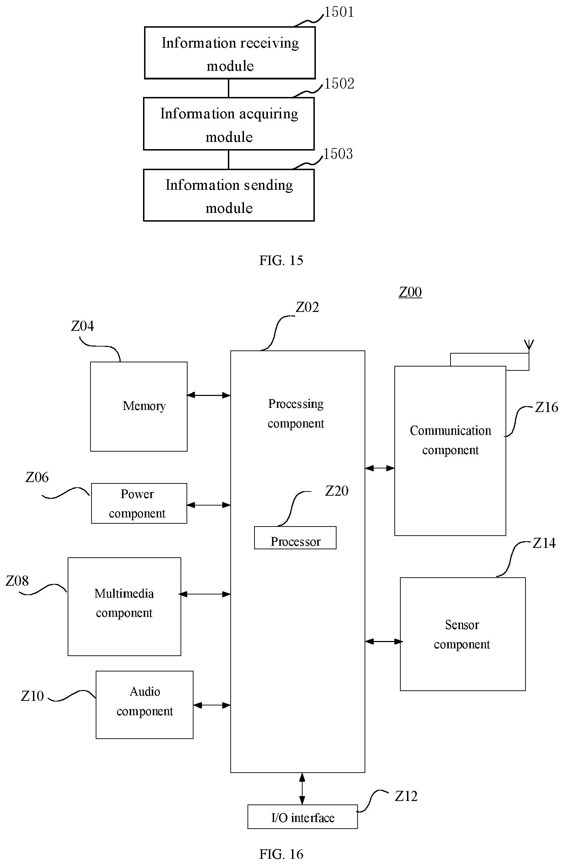

FIG. 15 shows an apparatus for video interaction according to an exemplary embodiment. The apparatus includes: an information receiving module 1501, configured to receive, from a first user account, an information acquisition request generated via a client for a target video in a playing state; an information acquiring module 1502, configured to acquire, in response to the information acquisition request, at least one of the following information: history interaction information, interaction recommendation information, and preset interaction information of the target video, and interaction association information matching input content received by the client; and an information sending module 1503, configured to return the acquired information to the client, such that the client presents the acquired information to the first user account.

In some embodiments, the information acquiring module includes: an input content acquiring unit, configured to acquire, via a long connection with the client, input content received by the client; a similarity acquiring unit, configured to acquire a text similarity between the input content and each piece of interaction target information in a pre-stored interaction target information set; and an interaction association information acquiring unit, configured to determine a specified number of pieces of interaction target information with relatively high text similarities as matched interaction association information.

In some embodiments, the similarity acquiring unit is configured to: acquire a first keyword of the input content and a second keyword of each piece of interaction target information by word segmentation on the input content and each piece of interaction target information in the interaction target information set respectively; and acquire a text similarity between the first keyword and the second keyword of each piece of interaction target information.

In some embodiments, the similarity acquiring unit is configured to: acquire a first component word set of the input content and a second component word set of each piece of interaction target information by word segmentation on the input content and each piece of interaction target information in the interaction target information set respectively; acquire a word feature vector of each first component word in the first component word set, and acquire a first statement feature vector corresponding to the input content based on the word feature vector; acquire a word feature vector of each second component word in the second component word set of each piece of interaction target information, and acquire a second statement feature vector corresponding to each piece of interaction target information based on the word feature vector; and acquire a text similarity between the first statement feature vector and each second statement feature vector.

In some embodiments, the information acquisition request carries target playing progress information of the target video; and the information acquiring module is configured to: read, based on the target playing progress information of the target video, a target video frame picture corresponding to the target playing progress information from the target video; acquire a specified number of video frames adjacent to the target video frame picture, and determine the video frames as the video frames associated with the target video frame picture; acquire history target information corresponding to the associated video frames; determine the number of occurrences of the same history target information; and select a specified number of pieces of history target information based on the number of occurrences of the same history target information as the history interaction information of the target video.

In some embodiments, the information acquisition request carries a target video frame picture; and the information acquiring module is configured to: extract an image feature in the target video frame picture by image recognition on the target video frame picture; acquire a video keyword corresponding to the image feature; and generate corresponding interaction recommendation information based on the video keyword, and determine the interaction recommendation information as the interaction recommendation information of the target video.

In some embodiments, the information acquiring module is configured to: acquire video interaction information corresponding to the target video from a pre-stored video interaction information set, wherein the video interaction information includes at least one of a video keyword and popular interaction information that are preset for the target video.

In some embodiments, the information receiving module is further configured to: receive interaction information from the first user account, wherein the interaction information includes a target video frame picture and target information corresponding to the target video frame picture; and the information sending module is further configured to: determine a second user account corresponding to the interaction information, and send the interaction information to the second user account.

In some embodiments, the apparatus further includes a target video frame picture acquiring module; the information receiving module is further configured to receive target playing progress information, which is sent by the first user account via the client, of the target video; the target video frame picture acquiring module is configured to read, based on the target playing progress information, a target video frame picture corresponding to the target playing progress information from the target video; and the information sending module is further configured to return the target video frame picture to the client.

In some embodiments, the information receiving module is further configured to receive interaction response information that is sent by the second user account and corresponds to the interaction information; and the information sending module is further configured to send the interaction response information to the first user account.

In some embodiments, the information receiving module is further configured to receive interaction information from third user account; the information sending module is further configured to return the interaction information to the first user account; the information receiving module is further configured to receive interaction response information that is sent by the first user account for the interaction information sent by the third user account; and the information sending module is further configured to send the interaction response information to the third user account.

In some embodiments, the information receiving module is further configured to receive an information setting request from the second user account for the target video; and the information acquiring module is further configured to acquire and store preset interaction information corresponding to the target video.

In some embodiments, the second user account includes either a user account for providing the target video or a user account selected by the first user account.

Details about operations performed by the modules in the apparatus in the above embodiment have been given in detail in the embodiments of the related method (the method embodiments corresponding to FIG. 8 to FIG. 11), which are not described herein again.

FIG. 16 is a block diagram of a device Z00 used for a method for video interaction according to an exemplary embodiment. For example, the device Z00 may be a mobile phone, a computer, a digital broadcast terminal, a message transceiver device, a gaming console, a tablet device, a medical device, a fitness device, a personal digital assistant, and the like.

Referring to FIG. 16, the device Z00 may include one or more of the following components: a processing component Z02, a memory Z04, a power component Z06, a multimedia component Z08, an audio component Z10, an input/output (I/O) interface Z12, a sensor component Z14, and a communication component Z16.

The processing component Z02 typically controls the overall operation of the device Z00, for example, operations associated with display, phone calls, data communications, camera operations, and recording operations. The processing component Z02 may include one or more processors Z20 to execute instructions to complete all or some of the processes of the method described above. In addition, the processing component Z02 may include one or more modules that facilitate interaction between the processing component Z02 and other components. For example, the processing component Z02 may include a multimedia module to facilitate interaction between the multimedia component Z08 and the processing component Z02.

The memory Z04 is configured to store various types of data to support operations on the device Z00.Examples of such data include instructions for any application or method operating on the device Z00, contact data, phone book data, messages, pictures, videos, and the like. The memory Z04 may be implemented by any type of volatile or non-volatile storage device or a combination thereof, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disc.

The power component Z06 provides power to the various components of the device Z00. The power component Z06 may include a power management system, one or more power supplies, and other components associated with power generating, management, and distribution for the device Z00.

The multimedia component Z08 includes a screen providing an output interface between the device Z00 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensors may not only sense the boundaries of the touch or swipe action, but also detect the duration and pressure associated with the touch or swipe action. In some embodiments, the multimedia component Z08 includes a front-facing camera and/or a rear-facing camera. The front-facing camera and/or the rear-facing camera can receive external multimedia data when the device Z00 is in an operating mode, such as a shooting mode or a video mode. Each front-facing camera and rear-facing camera may be a fixed optical lens system or have a focal length and optical zoom capability.

The audio component Z10 is configured to output and/or input audio signals. For example, the audio component Z10 includes a microphone (MIC) configured to receive external audio signals when the device Z00 is in an operating mode, such as a call mode, a recording mode, and a voice recognition mode. The received audio signal may be further stored in the memory Z04 or sent via the communication component Z16. In some embodiments, the audio component Z10 further includes a speaker for outputting audio signals.

The I/O interface Z12 provides an interface between the processing component Z02 and aperipheral interface module, and the peripheral interface module may be a keyboard, a click wheel, a button, or the like. The buttons may include, but are not limited to: a home button, a volume button, a start button, and a lock button.

The sensor component Z14 includes one or more sensors for providing status assessment of various aspects of the device Z00.For example, the sensor component Z14 may detect an on/off state of the device Z00, and relative positioning of components, for example, the components are the display and keypad of the device Z00. The sensor component Z14 may also detect a position change of the device Z00 or a component of the device Z00, the presence or absence of user contact with the device Z00, orientation or acceleration/deceleration of the device Z00, and a temperature change of the device Z00.The sensor component Z14 may include a proximity sensor configured to detect the presence of nearby objects without any physical contact. The sensor component Z14 may also include an optical sensor, such as a CMOS or CCD image sensor, for use in imaging applications. In some embodiments, the sensor component Z14 may also include an accelerometer sensor, a gyroscope sensor, a magnetic sensor, a pressure sensor, or a temperature sensor.

The communication component Z16 is configured to facilitate communication between the device Z00 and other devices by wired or wireless means. The device Z00 may access a wireless network based on a communication standard, such as Wi-Fi, a carrier network (e.g., 2G, 3G, 4G, or 5G), or a combination thereof. In an exemplary embodiment, the communication component Z16 receives broadcast signals or broadcast-related information from an external broadcast management system via a broadcast channel. In an exemplary embodiment, the communication component Z16 further includes a near-field communication (NFC) module to facilitate short-range communication. For example, the NFC module may be implemented based on the radio frequency identification (RFID) technology, infrared data association (IrDA) technology, ultra-wideband (UWB) technology, Bluetooth (BT) technology, and other technologies.

In some embodiments, the device Z00 includes a processor; and a memory configured to store instructions. The instructions, when loaded and executed by the processor, cause the processor to: display an information input interface in response to an information input instruction from a first user account for a target video in a playing state; acquire, via the information input interface, target information input by the first user account, and generate corresponding interaction information based on the target information and a target video frame picture corresponding to the target information; and send the interaction information to a second user account.

In some embodiments, the instructions, when loaded and executed by the processor, cause the processor to: acquire, from the target video, a video frame picture corresponding to a time point at which the information input instruction is received, and determining the video frame picture as the target video frame picture.

In some embodiments, the instructions, when loaded and executed by the processor, cause the processor to: acquire target playing progress information of the target video, and read, from the target video, the target video frame picture corresponding to the target playing progress information.

In some embodiments, the instructions, when loaded and executed by the processor, cause the processor to: receive input content via the information input interface; acquire and present interaction association information matching the input content; and determine, in response to a received selection instruction, the corresponding target information from the presented interaction association information.

In some embodiments, the instructions, when loaded and executed by the processor, cause the processor to: acquire and present history interaction information corresponding to video frames associated with the target video frame picture; and determine, in response to a received selection instruction, the corresponding target information from the presented history interaction information.

In some embodiments, the instructions, when loaded and executed by the processor, cause the processor to: acquire and present interaction recommendation information corresponding to the target video frame picture; and determine, in response to a received selection instruction, the corresponding target information from the presented interaction recommendation information.

In some embodiments, the instructions, when loaded and executed by the processor, cause the processor to: acquire and present preset interaction information corresponding to the target video; and determine, in response to a received selection instruction, the corresponding target information from the presented preset interaction information.

In some embodiments, the instructions, when loaded and executed by the processor, cause the processor to: receive interaction response information that is sent by the second user account and corresponds to the interaction information; and present the interaction response information to the first user account.

In some embodiments, the instructions, when loaded and executed by the processor, cause the processor to: receive interaction information from third user account, and present the received interaction information to the first user account; and acquire interaction response information input by the first user account for the third user account, and send the interaction response information to the third user account.

In some embodiments, the instructions, when loaded and executed by the processor, cause the processor to: generate the corresponding interaction information by combining the target information and the target video frame picture corresponding to the target information in response to an information output instruction from the first user account for the target information.

In some embodiments, the second user account includes either a user account for providing the target video or a user account selected by the first user account.

In some embodiments, the instructions, when loaded and executed by the processor, cause the processor to: send the interaction information to a server, and trigger the server to send the interaction information to the second user account.

In some embodiments, the instructions, when loaded and executed by the processor, cause the processor to: send an information acquisition request to a server in response to a trigger operation performed by the first user account on the information input interface and trigger the server to return at least one of the following information: history interaction information, interaction recommendation information and preset interaction information of the target video, and interaction association information matching the input content received by the information input interface, and present the returned information; and determine the corresponding target information from the presented information in response to a received selection instruction.

In some embodiments, the device Z00 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the method described above.

In some embodiments, a non-transitory computer readable storage medium including instructions is further provided, for example, the memory Z04 including instructions, the instructions being executed by the processor Z20 of the device Z00 to accomplish the method described above. For example, the non-transitory computer readable storage medium may be a ROM, a random-access memory (RAM), a CD-ROM, a magnetic tape, a floppy disk, an optical data storage device, or the like.

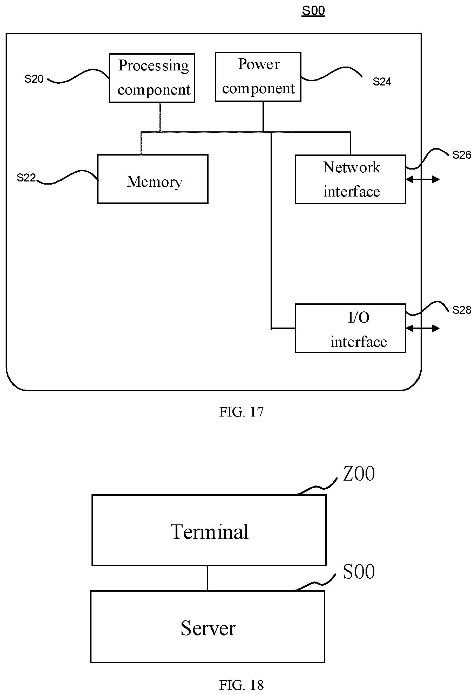

FIG. 17 is a block diagram of a device S00 used for a method for video interaction according to an exemplary embodiment. For example, the device S00 may be a server. Referring to FIG. 17, the device S00 includes a processing component S20, which further includes one or more processors; and a memory resource represented by a memory S22, for storing instructions executable by the processing component S20, such as an application program. The application program stored in the memory S22 may include one or more modules each corresponding to a set of instructions. In addition, the processing component S20 is configured to execute the instructions to perform the method for video interaction described above.

The device S00 may further include a power component S24 configured to perform power management of the device S00, a wired or wireless network interface S26 configured to connect the device S00 to a network, and an I/O interface S28.The device S00 may operate an operating system stored in the memory S22, such as Windows Server, Mac OS X, Unix, Linux, FreeBSD, or the like.

In some embodiments, the device S00 includes a processor; and a memory configured to store instructions. The instructions, when loaded and executed by the processor, cause the processor to: receive, from a first user account, an information acquisition request generated via a client for a target video in a playing state; and acquire, in response to the information acquisition request, at least one of the following information: history interaction information, interaction recommendation information and preset interaction information of the target video, and interaction association information matching input content received by the client, and return the acquired information to the client, such that the client presents the acquired information to the first user account.

In some embodiments, the instructions, when loaded and executed by the processor, cause the processor to: acquire, via a long connection with the client, the input content received by the client; acquire a text similarity between the input content and each piece of interaction target information in a pre-stored interaction target information set; and determine a specified number of pieces of interaction target information with relatively high text similarities as matched interaction association information.

In some embodiments, the instructions, when loaded and executed by the processor, cause the processor to: read, based on the target playing process information of the target video, a target video frame picture corresponding to the target playing process information from the target video; acquire a specified number of video frames adjacent to the target video frame picture, and determine the video frames as the video frames associated with the target video frame picture; acquire history target information corresponding to the associated video frames; determine the number of occurrences of the same history target information; and select a specified number of pieces of history target information based on the number of occurrences of the same history target information as the history interaction information of the target video.

In some embodiments, the instructions, when loaded and executed by the processor, cause the processor to: extract an image feature in the target video frame picture by image recognition on the target video frame picture; acquire a video keyword corresponding to the image feature; and generate corresponding interaction recommendation information based on the video keyword, and determine the interaction recommendation information as the interaction recommendation information of the target video.

In some embodiments, the instructions, when loaded and executed by the processor, cause the processor to: acquire video interaction information corresponding to the target video from a pre-stored video interaction information set, wherein the video interaction information includes at least one of a video keyword and popular interaction information that are preset for the target video.

In some embodiments, the instructions, when loaded and executed by the processor, cause the processor to: receive interaction information from the first user account, wherein the interaction information includes a target video frame picture and target information corresponding to the target video frame picture; and determine a second user account corresponding to the interaction information, and sending the interaction information to the second user account.

In some embodiments, a storage medium including instructions is further provided, such as a memory S22 including instructions, wherein the instructions may be executed by the processor of the device S00 to accomplish the method described above. The storage medium may be a non-transitory computer readable storage medium, for example, the non-transitory computer readable storage medium may be a ROM, a RAM, a CD-ROM, a magnetic tape, a floppy disk, an optical data storage device, or the like.

FIG. 18 is a block diagram of a video interaction system according to an exemplary embodiment. The system may include the terminal device Z00 shown in FIG. 16 and the server device S00 shown in FIG. 17. In some embodiments, the terminal device Z00 may include a terminal device that initiates live streaming and a terminal device that watches the live streaming, wherein the specific operation manner of each device has been described in detail in the embodiments of the related method (the method embodiment corresponding to FIG. 12), and details are not described herein again.

A person skilled in the art can easily think of other implementation solutions of the present disclosure after considering the specification and practicing the content disclosed herein. The present disclosure is intended to cover any variations, purposes or applicable changes of the present disclosure. Such variations, purposes or applicable changes follow the general principle of the present disclosure and include common knowledge or conventional technical means in the technical field which is not disclosed in the present disclosure. The specification and embodiments are merely considered as illustrative, and the real scope and spirit of the present disclosure are pointed out by the appended claims.

It should be noted that, the present disclosure is not limited to the precise structures that have been described above and shown in the accompanying drawings, and can be modified and changed without departing from the scope of the present disclosure. The scope of the present disclosure is defined by the appended claims.

## Claims

1. A method for video interaction, comprising:
displaying (210) an information input interface in response to an information input instruction from a first user account for a target video in a playing state;
acquiring (220), via the information input interface, target information input by the first user account, and generating corresponding interaction information based on the target information and a target video frame picture corresponding to the target information; and
sending (230) the interaction information to a second user account.

2. The method according to claim 1, further comprising:
acquiring, from the target video, a video frame picture corresponding to a time point at which the information input instruction is received, and determining the video frame picture as the target video frame picture.

3. The method according to claim 1 or 2, further comprising:
acquiring target playing progress information of the target video, and reading, from the target video, the target video frame picture corresponding to the target playing progress information.

4. The method according to any one of claims 1 to 3, wherein said acquiring (220), via the information input interface, the target information input by the first user account comprises:
receiving (310) input content via the information input interface;
acquiring (320) and presenting interaction association information matching the input content; and
determining (330), in response to a received selection instruction, the corresponding target information from the presented interaction association information.

5. The method according to any one of claims 1 to 3, wherein said acquiring (220), via the information input interface, the target information input by the first user account comprises:
acquiring (410) and presenting history interaction information corresponding to video frames associated with the target video frame picture; and
determining (420), in response to a received selection instruction, the corresponding target information from the presented history interaction information.

6. The method according to any one of claims 1 to 3, wherein said acquiring (220), via the information input interface, the target information input by the first user account comprises:
acquiring (510) and presenting interaction recommendation information corresponding to the target video frame picture; and
determining (520), in response to a received selection instruction, the corresponding target information from the presented interaction recommendation information.

7. The method according to any one of claims 1 to 3, wherein said acquiring (220), via the information input interface, the target information input by the first user account comprises:
acquiring (610) and presenting preset interaction information corresponding to the target video; and
determining (620), in response to a received selection instruction, the corresponding target information from the presented preset interaction information.

8. The method according to any one of claims 1 to 7, further comprising:
receiving (710) interaction response information that is sent by the second user account and corresponds to the interaction information; and
presenting (720) the interaction response information to the first user account.

9. The method according to any one of claims 1 to 8, further comprising:
receiving interaction information from third user account, and presenting the received interaction information to the first user account; and
acquiring interaction response information input by the first user account for the third user account, and sending the interaction response information to the third user account.

10. The method according to any one of claims 1 to 9, wherein said generating the corresponding interaction information based on the target information and the target video frame picture corresponding to the target information comprises:
generating the corresponding interaction information by combining the target information and the target video frame picture corresponding to the target information, in response to an information output instruction from the first user account for the target information.

11. The method according to any one of claims 1 to 10, wherein the second user account comprises either a user account for providing the target video or a user account selected by the first user account.

12. The method according to any one of claims 1 to 11, wherein said sending (230) the interaction information to the second user account comprises:
sending the interaction information to a server, and triggering the server to send the interaction information to the second user account.

13. The method according to any one of claims 1 to 3 and claims 8 to 12, wherein said acquiring (220), via the information input interface, the target information input by the first user account comprises:
sending an information acquisition request to a server in response to a trigger operation performed by the first user account on the information input interface, and triggering the server to return at least one of the following information: history interaction information, interaction recommendation information and preset interaction information of the target video, and interaction association information matching input content received by the information input interface, and presenting the returned information; and
determining the corresponding target information from the presented information in response to a received selection instruction.

14. A method for video interaction, comprising:
receiving (810), from a first user account, an information acquisition request generated via a client for a target video in a playing state; and
acquiring (820), in response to the information acquisition request, at least one of the following information: history interaction information, interaction recommendation information and preset interaction information of the target video, and interaction association information matching input content received by the client, and returning (830) the acquired information to the client, such that the client presents the acquired information to the first user account.

15. An electronic device (Z00), comprising:
a processor (Z20); and
a memory (Z04) configured to store at least one instruction executable by the processor (Z20),
wherein the processor (Z20), when loading and executing the at least one instruction, is caused to perform a method comprising:
displaying an information input interface in response to an information input instruction from a first user account for a target video in a playing state;
acquiring, via the information input interface, target information input by the first user account, and generating corresponding interaction information based on the target information and a target video frame picture corresponding to the target information; and
sending the interaction information to a second user account.
